Europäisches Patentamt

European Patent Office

Office européen des brevets

(11) Publication number: **0 343 704**
A2

## (12) EUROPEAN PATENT APPLICATION

(21) Application number: 89201193.3

(22) Date of filing: 12.05.89

(51) Int. Cl.⁴: **B60N 1/12** , **B60R 22/10**

(30) Priority: 25.05.88 IT 5317888 U

(43) Date of publication of application:
29.11.89 Bulletin 89/48

(84) Designated Contracting States:
AT DE ES FR GB NL SE

(71) Applicant: VALLKO S.r.l.
Via Valeggio, 41
I-10129 Torino(IT)

(72) Inventor: Lelio, Alfonso
Largo Sempione 176
I-10154 Torino(IT)

(74) Representative: Lotti, Giorgio
c/o Ing. Barzano' & Zanardo S.p.A. Via
Cernaia 20
I-10122 Torino(IT)

(54) Connecting device for children seats for motor vehicles.

(57) A connecting device for children seats for motor
vehicles comprises for each side of the seat a lever
hinged to the stiff structure of the children seat and
having a cam-like surface faced by a bracket also
hinged to said stiff structure; an opening is found
between the cam-like surface of the lever and the
bracket, said opening is the passage for one end of
a belt fastened at the other end to the base of the
motorcar; the lever is equipped with a handgrip for
the manual rotation of engagement and disengagement positions of the belt into said opening.

Fig.3

# CONNECTING DEVICE FOR CHILDREN SEATS FOR MOTOR VEHICLES

The invention regards a connecting device for children seats for motor vehicles.

The children seats for motor vehicles may be divided in two fundamental types: a type where the child is held to the seat by means of specific children safety belts, and another type where the child is constrained to the seat by a table-shaped padding which is in turn held by the current belts assembled on the motorcar. In this latter case the belt of the motor car holds the table-shaped padding, the child and the seat as a whole body.

In the first case, the problem is to connect firmly the children seat to the motorcar seat.

An existing solution is the one which utilizes the safety belts which are possibly assembled on the back motorcar seat. Said solution meets the homologation tests requirements but movements of the children seat are possible as same is not firmly fastened especially sideways.

Some present solutions for the firm fastening of the children seat to the back seat of the motorcar have two specific safety belts connected to lower fastening holes of the current safety belts, already assembled by the manufacturer. Said specific belts must be connected one for each side of the children seat. Difficulties are encountered, however, when stretching said belts to fasten the children seat and when unstretching them to extract said seat.

Furthermore, said belts usually lie on the motorcar seat when the children seat has been removed, so it is advisable that said belts carry no mechanical elements at their operating ends which may disturb the user of the seat bench of the motorcar (some embodiments carry belts with a spring catch connection at the end).

Purpose of the invention is to propose a connecting device for children seat able to overcome the above mentioned inconveniences, by means of which the belts which fasten it to the motorcar seat may be stretched easily and rapidly.

Furthermore, the connecting device of this invention does not carry elements that may disturb the seated passenger when the children seat has been removed.

For these purposes and for others which may be better appreciated as the description follows, the invention proposes a connecting device for children seat to be set on motorcars wherein for each side of the seat it comprises a lever hinged to the stiff structure of the children seat and having a cam-like surface faced by a bracket also hinged to said stiff structure; an opening is found between the cam-like surface of the lever and the bracket, said opening is the passage for one end of a belt fastened at the other end to the base of the motorcar; the lever is equipped with a handgrip for the manual rotation of engagement and disengagement positions of the belt into said opening.

The connecting device is now being described and reference is made to the enclosed drawings:

Fig. 1 is the perspective view of a children seat equipped with the connecting device of the invention;

Fig. 2 is the enlarged view of the seat part carrying the device of the invention;

Fig. 3 is the section according to trace III-IV of Fig. 2.

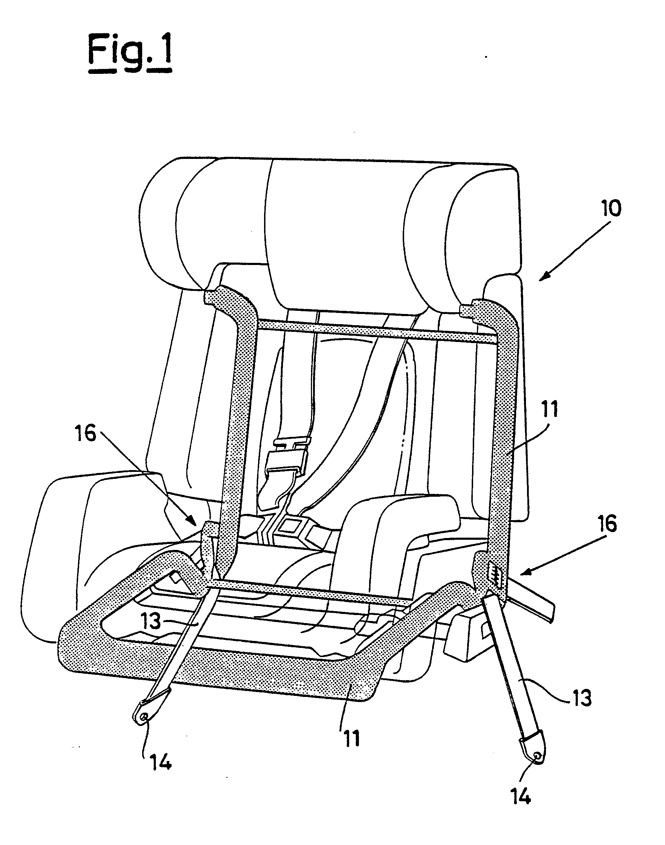

Fig. 1 illustrates the seat 10 in one of its possible embodiments, but it is understood that said seat may have different shapes and features as the seat embodiment is not the subject of the invention.

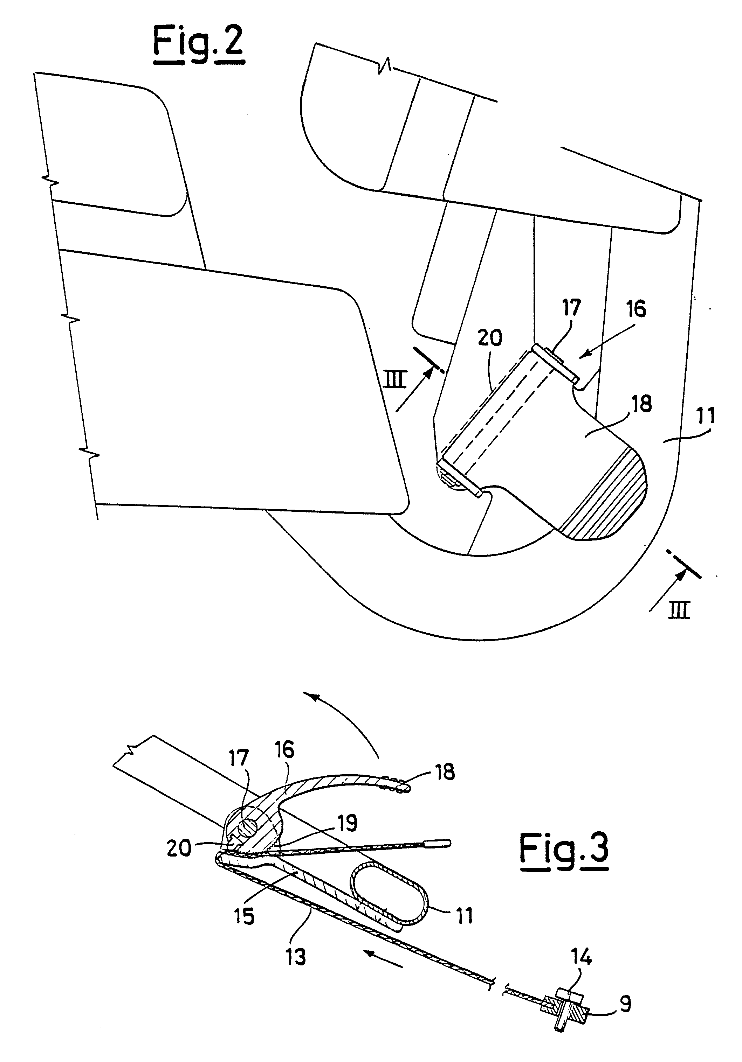

The seat 10 carries a frame 11 which is its stiff structure; the connecting device 12 of the invention is attached to the frame 11 (clearly illustrated in Fig. 2 and 3).

Said device comprises a belt 13 which is fastened with an end bracket 9 by a bolt 14 to a connecting point already existing on the bottom base of all motorcars for the fastening of the traditional passenger safety belts.

The other end of the belt 13 is inserted between a bracket 15, integral to frame 11, and a lever 16 hinged to frame 11 in 17.

The lever 16 carries a handgrip 18, a toothed surface 19 and a tooth made of semisoft material 20, to keep the lever in the position illustrated in Fig. 3.

The device of the invention is assembled as follows: choose the location of the children seat 10 either in the center or on one side of the motorcar seat; locate the lower connecting points of the safety belts assembled by the manufacturer on the bottom base of the back seat; choose two holes, lined up as near as possible to the connecting points of the children seat and assemble the belts fastening with bolt 14.

If safety belts are already fastened to connecting points, before unscrewing the bolt 14 observe carefully the assembly and free movement conditions of the assembled belt, to ensure that said conditions remain unaltered.

Then unscrew bolt 14, place bracket 9 of belt 13 of the children seat and screw again bolt 14 checking that the assembly be technically satisfactory.

Successively, rotate the handgrip 18 of the children seat to the forward limit stop, as indicated by arrow A of Fig. 3; with one hand keep the safety handgrip lifted, with the other insert the belt 13 from the top in the proper slit between bracket 15 and lever 16 according to Fig. 3. Then pull the entire belt to the bottom stretching it.

The above described operation is to be performed also on the opposite side and, after having pulled the entire belt of this second side stretching it to its maximum, lever 18 must be lowered overcoming the elastic stability point, that is tooth 20 which is now positioned as illustrated in Fig. 3.

Finally, the drawing of the belt on the first side must be completed, and same must also be locked by lowering the lever and overcoming the elastic stability point 20.

Inverse operations will allow to disengage the belts and extract the seat from its connection.

As illustrated in Fig. 3, the lever will have a cam-like shape to exert the maximum pressure on the belt 13 during locking stage, and the toothing 19 further cooperates to avoid the accidental withdrawing of the belt from the egagement between bracket 15 and lever 16.

Finally, the purpose of the tooth 20 is to give the user a feeling of stability in the locking stage, at the end of the connection as illustrated in Fig. 3.

## Claims

1) Connecting device for children seats for motor vehicles wherein it comprises for each side of the seat a lever hinged to the stiff structure of the children seat and having a cam-like surface faced by a bracket also hinged to said stiff structure; an opening is found between the cam-like surface of the lever and the bracket, said opening is the passage for one end of a belt fastened at the other end to the base of the motorcar; the lever is equipped with a handgrip for the manual rotation of engagement and disengagement positions of the belt into said opening.

2) Connecting device according to claim 1 wherein the cam-like surface of the lever is toothed.

3) Connecting device according to claim 1 wherein the cam-like surface carries a semisoft tooth which operates as a trip at the end of the lever rotation towards the engagement position of the belt and keeps the lever in said position.

4) Connecting device according to the previous claims and as described above and illustrated in the attached drawings.

# Fig.1

# Fig.2

# Fig.3